Europäisches Patentamt

European Patent Office

Office européen des brevets

(19)

(11) EP 0 639 919 B1

(12)

# FASCICULE DE BREVET EUROPEEN

(45) Date de publication et mention
de la délivrance du brevet:
**31.03.1999 Bulletin 1999/13**

(51) Int Cl.⁶: **H04N 1/32**

(21) Numéro de dépôt: **94401860.5**

(22) Date de dépôt: **16.08.1994**

(54) **Dispositif sécurisé et procédé de sécurisation de transmission de documents par télécopie, et code graphique d'authentification d'une image**

Sicherheitsapparat und Verfahren für sichere Faksimileübertragung von Dokumenten und Graphikkode um die Echtheit eines Bildes zu beurkunden

Secure apparatus and method of securing document transmission by facsimile, and graphic code to authenticate an image

(84) Etats contractants désignés:
DE GB

(30) Priorité: **18.08.1993 FR 9310076**

(43) Date de publication de la demande:
**22.02.1995 Bulletin 1995/08**

(73) Titulaires:
• **FRANCE TELECOM**
**75015 Paris (FR)**
• **LA POSTE**
**F-92777 Boulogne Billancourt Cédex (FR)**

(72) Inventeurs:
• **Pailles, Jean-Claude**
**F-14610 Epron (FR)**

• **Le Petit, Olivier**
**F-14000 Caen (FR)**
• **Milet, Isabelle**
**F-14210 Baron sur Odon (FR)**

(74) Mandataire: **Dubois-Chabert, Guy et al**
**Société de Protection des Inventions**
**25, rue de Ponthieu**
**75008 Paris (FR)**

(56) Documents cités:
EP-A- 0 161 181      EP-A- 0 532 381
EP-A- 0 542 703      FR-A- 2 660 135
US-A- 4 900 902

## Description

Domaine technique

La présente invention concerne un dispositif sécurisé, et un procédé de sécurisation de transmission de documents par télécopie, et un code graphique d'authentification d'une image.

Etat de la technique antérieure

Les points forts du service de télécopie sont la simplicité d'emploi, l'utilisation du réseau téléphonique public et la transmission directe. Mais il existe un point faible : la sécurité. Ce demier point exclut de conférer un statut juridique à un document transmis en télécopie.

La majorité des télécopieurs sont du groupe 3 et ne fonctionnent pas en mode correction d'erreurs. Ces télécopieurs n'assurent aucun niveau d'intégrité. Les altérations peuvent être dues aux bruits de transmission, de scannérisation et d'impression ou bien à des actes délibérés de falsification. Or, pour une transmission par télécopie, l'utilisation d'une signature de type exclusivement électronique sur le fichier bitmap (image scannérisée) pour contrôler l'intégrité n'est pas envisageable. En effet, toute erreur de transmission modifie de manière conséquente la signature. De plus, la non-répudiation a posteriori du document ne peut être alors réalisée qu'à condition de conserver les fichiers binaires des télécopies reçues.

Si l'on utilise deux télécopieurs, fonctionnant en mode caractère, l'emploi d'une signature électronique est possible, car la transmission se fait alors en mode correction d'erreur. Cependant, la vérification de la signature doit se faire à la main avec un terminal adéquat, ce qui constitue une opération longue et fastidieuse.

L'invention a pour objet de rendre plus sûre la transmission de documents par télécopie, pour éviter notamment toute répudiation a posteriori d'un document émis. Elle a également pour objet de permettre l'authentification d'une image ou d'un document.

Exposé de l'invention

L'invention propose, à cet effet, un dispositif de transmission de document par télécopie, caractérisé en ce que, du côté émetteur, il comprend un module de sécurisation plaçant, dans le fichier binaire transmis représentant une page de ce document, une signature graphique de type "morse", formée de plusieurs lignes symboles séparées par des interlignes, le symbole élémentaire étant un carré, tout bit valant «1 » étant représenté par un carré d'une couleur déterminée, noir par exemple, et tout bit valant « 0 » par un carré d'une couleur différente, blanc par exemple, les informations d'une même ligne étant contiguës, des marques gauche et droite, utiles lors de la relecture des bits, étant placées en début et fin de ligne, et en ce que cette signature est disposée dans le bas de la page émise, ou sur une page supplémentaire qui regroupe les signatures graphiques de toutes les pages d'un même document.

Ce dispositif comprend :

- soit un micro-ordinateur qui calcule et place la signature graphique au moment de la composition du message,
- soit un télécopieur sécurisé avec un module de sécurisation intégré ou un boîtier de sécurisation en série sur la ligne de transmission.

Le module de sécurité est intégré dans le module de sécurisation pour obtenir une signature électronique du message qui est intégrée au codage graphique. Il comporte un lecteur de cartes à mémoire capable de lire une carte à mémoire propre à chaque utilisateur qui possède un code confidentiel permettant d'authentifier celui-ci.

Avantageusement, du côté récepteur, le dispositif comprend un module de décodage et de vérification de la signature graphique.

L'invention propose également un procédé de sécurisation de transmission de documents par télécopie, caractérisé en ce qu'à l'émission on associe à chaque page de document émise une signature graphique la représentant, en ce que cette signature graphique est formée de plusieurs lignes symboles séparées par des interlignes, le symbole élémentaire étant un carré, tout bit valant « 1 » étant représenté par un carré d'une couleur déterminée, noir par exemple, et tout bit valant « 0 » par un carré d'une couleur différente, blanc par exemple, les informations d'une même ligne étant contiguës, des marques gauche et droite, utiles lors de la relecture des bits, étant placées en début et fin de ligne, et en ce que cette signature est disposée dans le bas de la page émise, ou sur une page supplémentaire qui regroupe les signatures graphiques de toutes les pages d'un même document.

Pour assurer une importante immunité au bruit de la signature graphique, on ajoute des bits de redondance au signal codé permettant de corriger, lors de la lecture, des erreurs isolées. Avantageusement, on utilise un code de Hamming sur 127 bits avec 7 bits de contrôle.

Avantageusement, à la réception, on utilise un filtrage morphologique "antibruit" qui permet d'éliminer sur la partie du fichier bitmap correspondant à la signature graphique les défauts d'image survenus lors de la transmission et/ou de l'impression et/ou du stockage (taches, traits, pliures...) dont la taille est strictement inférieure à la taille des carrés.

A la réception, le fichier bitmap de l'image est reçu directement, ou bien obtenu à partir d'une feuille rescannérisée dans le cas d'un contrôle a posteriori.

On effectue une lecture séquentielle des bits ligne par ligne, en commençant par le premier bit en haut à gauche, les marques gauche et droite ajoutées lors de la constitution de la signature graphique permettant de guider la lecture des bits.

Dans le cas d'une vérification a posteriori, on imprime la page télécopie, et on calcule le surplus algébrique si ajouté à chaque bloc de bits "0" ou "1" identiques, on détecte un incident si :

$$\left|\sum_{i=1}^{3} \varepsilon i\right| > 0,6 \quad \text{et} \quad |\varepsilon i| > 0,02$$

A la réception, on vérifie la cohérence entre les bits du message et les bits de signature électronique. Puis on vérifie la cohérence entre la signature graphique décodée et l'image reçue en clair.

A la réception, en cas de vérification a posteriori, on réalise une différence "élastique" entre l'image issue de la signature graphique et l'image reçue en clair.

En associant une signature graphique à chaque page de document transmis par télécopie, l'invention permet de sécuriser cette transmission.

Avantageusement, l'invention permet d'assurer l'intégrité d'un document vis-à-vis d'un tiers ou d'un destinataire "non-sécurisé". Elle permet également la non-répudiation en émission. En effet, si le destinataire stocke sur papier le document reçu, la signature graphique permet d'apporter la preuve de l'origine de la télécopie. De même, toute fraude du récepteur sur le document reçu peut être détectée grâce à la non-cohérence du message et de la signature (non-répudiation en réception).

L'intérêt de l'invention est de permettre un stockage papier de documents de manière sécurisée. Elle convient parfaitement à l'échange de documents par télécopie. L'utilisation de techniques de traitement d'image permet d'associer une signature graphique à toute page télécopie transmise. Cette signature garantit l'intégrité du document pendant sa transmission ou son stockage sur papier et en donne son origine.

L'invention, concerne également un code graphique d'authentification d'une image caractérisé en ce qu'il comprend un ensemble de lignes symboles, correspondant à un codage de ladite image, séparées par des interlignes, le symbole élémentaire étant un carré, tout bit valant « 1 » étant représenté par un carré d'une couleur déterminée, noir par exemple, et tout bit valant « 0 » par un carré d'une couleur différente, blanc par exemple, les informations d'une même ligne étant contiguës, des marques gauche et droite, utiles lors de la relecture des bits, étant placées en début et fin de ligne, et en ce que ce code est disposé dans le bas d'une page d'un document, ou sur une page supplémentaire qui regroupe les codes de toutes les pages d'un même document.

Avantageusement, la représentation graphique selon l'invention permet de stocker davantage d'informations que les codes à barres alphanumériques classiques très redondants. En effet, son encombrement est de moindre importance que celui des codes à barres en largeur, mais surtout en hauteur. Cela tient au fait que la relecture de la zone graphique ne pose pas les problèmes rencontrés dans la pratique pour relire un code à barres.

Brève description des dessins

- La figure 1 illustre une page de document comparant une signature graphique selon l'invention ;
- la figure 2 illustre le dispositif selon l'invention.

Exposé détaillé de modes de réalisation

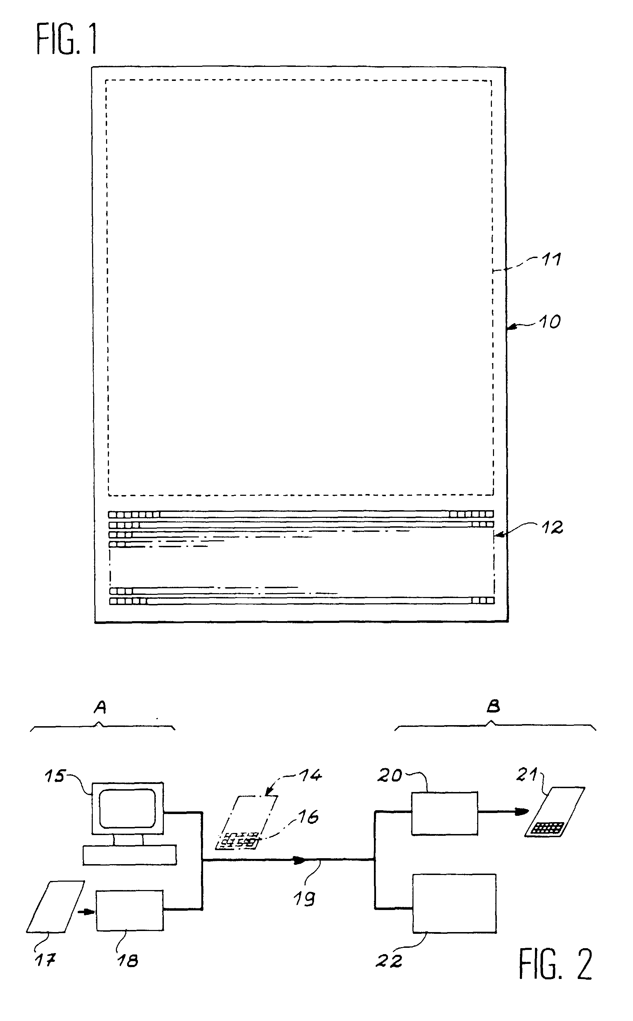

L'invention concerne la sécurisation de transmission de documents par télécopie, en associant à chaque page transmise une signature graphique la représentant. Cette signature graphique est du type "morse" et présente une bonne immunité à tous les bruits survenant dans le cas d'un échange télécopie. Elle peut être disposée dans un endroit déterminé de la page considérée par exemple dans le bas de celle-ci si celui-ci est libre, ou sinon sur une page supplémentaire (appelée "page sécuritaire") qui regroupe les signatures graphiques de toutes les pages d'un même document. La figure 1 représente une page 10 de document comprenant une zone 11 contenant le texte de l'information à certifier et la signature graphique 12.

L'information contenue dans la page télécopie se résume, en effet, à un fichier binaire qui peut être obtenu de deux façons :

- dans le cas d'une composition sur micro-ordinateur, on recueille les codes ASCII des caractères frappés sur le clavier de l'ordinateur. Les codes sont ensuite convertis en éléments binaires ;
- lorsqu'il s'agit d'une télécopie papier déjà formée, le fichier bitmap de la zone à certifier (message M) issu de la scannérisation est comprimé selon les codages classiques en télécopie, fournissant ainsi un fichier binaire utilisable.

Ainsi, dans le procédé de l'invention, comme représenté sur la figure 2 du côté émetteur A :

- soit la télécopie 14 est composée à partir d'un micro-ordinateur 15 qui calcule et place la signature graphique 16 au moment de la composition du message. La télécopie est envoyée directement si l'émetteur dispose d'une carte d'émission de télécopie ou carte "fax add-on" pour micro-ordinateur. Sinon elle est imprimée et un télécopieur classique non sécurisé peut être utilisé pour l'émission. La télécopie ne contient que du texte dactylographié, les logos et/ou figures intégrées ne peuvent alors pas faire partie de la zone qui est certifiée ; on utilise, en effet, directement les bits des codes ASCII frappés ;

- soit la télécopie 17 existe déjà sur papier, il faut alors utiliser un télécopieur 18 nouvelle génération avec un module 19 de sécurisation intégré, ou utiliser un boîtier de sécurisation en série sur la ligne téléphonique. Le module de sécurisation (intégré ou pas) détermine et place dans le fichier bitmap du document (fichier issu de la scannérisation) la signature graphique de la page. Cette configuration permet l'envoi de n'importe quel type de message (texte dactylographié/manuscrit, photographie, plan...).

Le module de sécurisation est inclus soit dans le télécopieur, soit dans un boîtier séparé, soit dans le micro-ordinateur. Un module de sécurité intégré au système de sécurisation permet d'obtenir une signature électronique du message qui est incorporée au codage graphique.

Ce module de sécurité comporte un lecteur de cartes à mémoire capable de lire une carte à mémoire propre à chaque utilisateur. L'utilisateur désirant émettre une télécopie sécurisée doit insérer sa carte à mémoire contenant ses clés afin qu'elle calcule la signature.

Du côté récepteur B, tout télécopieur 20 peut être utilisé pour obtenir un document 21 correspondant au document émis sur la ligne de transmission 19. Néanmoins, si le récepteur B veut vérifier lui-même l'intégrité du document et son origine, il doit disposer d'une machine contenant un module de sécurisation. Cette vérification peut être faite au moment de la réception, mais aussi a posteriori : le récepteur devant alors rescannériser le document papier qu'il a conservé. Si le récepteur B ne possède pas de télécopieur sécurisé, il peut demander à un serveur 22 de faire la vérification de l'intégrité du document et prouver son origine. Le récepteur scannérise alors la page papier reçue et transmet le fichier bitmap par télécopie au serveur. Le serveur possède un module de décodage et de vérification de la signature graphique. Une autre solution pour B est d'utiliser un autre télécopieur qui, lui, est sécurisé.

## Altérations dues à l'échange de documents par télécopie

L'échange d'une page télécopie implique des altérations ou effets de bruit. Différentes configurations peuvent se présenter.

Du côté émetteur A, comme décrit précédemment, s'il s'agit d'une composition sur micro-ordinateur, soit celui-ci dispose d'une carte "fax add-on" et peut envoyer directement le fichier électronique, correspondant au message composé, sur la ligne téléphonique, soit il n'en dispose pas et doit imprimer le document sur papier qui est scannérisé par son télécopieur. S'il s'agit d'un document sous forme papier, il subit une scannérisation par le télécopieur émetteur avant envoi.

Du côté récepteur B, les effets dus aux bruits de transmission sont communs à toutes les configurations. Seuls ces bruits interviennent dans le cas d'une vérification "on line", car le fichier bitmap est disponible directement. Pour une vérification a posteriori réalisée par le récepteur B, celui-ci doit imprimer la télécopie au moment de la réception, la stocker et la rescannériser au moment de la vérification. Pour une vérification effectuée par un serveur, il faut en plus que le récepteur B transmette par télécopie le document rescannérisé.

Le bruit dû à la transmission se résume à quelques lignes adjacentes erronées sur fichier bitmap d'arrivée. Les bruits de scannérisation sont : des translations, des rotations, des mauvaises scannérisations, des lettres peu contrastées... L'impression entraîne des déformations locales de l'image (l'encre bave). Les bruits papier lors du stockage sont des taches de taille, de forme et de position variables. Ainsi, le fichier bitmap d'une page télécopie côté récepteur peut s'avérer sensiblement dégradé par rapport au fichier bitmap initial émis.

L'invention permet d'utiliser une représentation de la page télécopie invariante aux effets de scannérisation, de transmission, de stockage et d'impression, en utilisant un procédé de codage graphique de l'image robuste vis-à-vis du bruit. On utilise une représentation facile à relire après transmission et rescannérisation de la page. La représentation graphique considérée est du type "morse" et présente une bonne immunité à tous les bruits survenant dans le cas d'un échange télécopie.

## Zone de signature graphique

Si on compose la télécopie sur micro-ordinateur, il est clair que pour placer la signature graphique d'une page, il faut réduire l'espace informatif. On considère donc une zone dans laquelle est placée l'information à certifier. Avantageusement, le bas de la page est réservé à l'emplacement de la zone "morse" sécurisant la page télécopie.

Si on veut certifier une télécopie papier déjà formée et que le bas de page libre est suffisamment haut, la signature graphique y est placée. Dans le cas contraire, on met la signature graphique sur une page supplémentaire (appelée page sécuritaire) qui regroupe les signatures graphiques de toutes les pages d'un document.

## Fichier binaire

L'information contenue dans la page télécopie se résume à un fichier binaire qui peut être obtenu de deux façons.

Dans le cas d'une composition sur micro-ordinateur, on recueille les codes ASCII des caractères frappés sur le clavier de l'ordinateur. Les codes sont ensuite convertis en éléments binaires (bits).

Lorsqu'il s'agit d'une télécopie papier déjà formée, le fichier bitmap de la zone à certifier (message M) issu de la scannérisation est comprimé selon les codages classiques en télécopie, fournissant ainsi un fichier binaire utilisable.

**Sécurité**

Avant de passer au codage graphique proprement dit, on fait intervenir la sécurité : on peut ajouter aux bits correspondant au message M de la page télécopie, la signature électronique de ce message.

Il n'y a pas de contrainte particulière sur la signature électronique puisque l'utilisateur peut envoyer facilement des informations au récepteur concernant ses éléments sécuritaires.

La signature électronique du message M met en jeu les informations contenues dans le message, des éléments secrets mémorisés dans une carte à mémoire en la possession de l'émetteur, un aléa (la date-heure par exemple pour éviter tout "rejeu", le rejeu étant une fraude consistant à réémettre, parfois à l'insu du véritable émetteur, un document vers un même destinataire sans que celui-ci ne puisse s'en apercevoir) et l'identité de l'émetteur. La carte à mémoire possède un code confidentiel permettant d'authentifier son propriétaire légitime. La signature électronique S(M) du message M, obtenue par un procédé de cryptographie classique, est vérifiable par la carte du récepteur s'il est sécurisé.

**Codage graphique**

Le message M et sa signature électronique S(M) forment une série binaire. Selon l'invention, on code alors chaque bit de la série sous forme "morse", le symbole élémentaire étant un carré. Tout bit valant 1 est représenté par un carré noir par exemple et tout bit valant 0 par un carré de couleur différente, blanc par exemple. Les informations sont contiguës : il n'y a pas d'espace entre deux carrés élémentaires. La zone codée est organisée séquentiellement par bits et par lignes. Des marques gauche et droite, utiles lors de la relecture des bits, sont placées en début et fin de ligne "morse".

La taille d'un carré peut être par exemple de 1 mm x 1 mm. Les lignes de carrés peuvent être séparées par des interlignes d'environ 0,3 mm. Les marques gauche et droite peuvent être composées de deux carrés noirs ("start bits") séparés des carrés représentant les bits utiles par un carré blanc de discrimination.

Pour assurer une importante immunité au bruit de la zone "morse", on ajoute aux bits de [M, S(M)] des bits de contrôle (ou bits de redondance). Ceux-ci permettent de corriger, lors de la lecture des carrés, les erreurs isolées. On peut par exemple utiliser un code de Hamming sur N = 127 bits avec 7 bits de contrôle. Cette zone est incorporée au fichier bitmap de la page ou du document de telle manière qu'on puisse transmettre le fichier obtenu selon le protocole télécopie.

**Décodage**

Pour le décodage, le processus inverse est mené. L'élément de travail est le fichier bitmap de l'image, celui-ci est reçu directement, ou bien obtenu à partir de la feuille rescannérisée dans le cas d'un contrôle a posteriori.

Un filtrage morphologique "antibruit" permet d'éliminer sur la partie du fichier bitmap correspondant à la signature graphique les défauts d'image survenus lors de la transmission et/ou de l'impression et/ou du stockage (taches, traits, pliures...) dont la taille est strictement inférieure à la taille des carrés. Il s'agit d'une ouverture morphologique classique en image binaire (érosion suivie d'une dilatation morphologique) comme décrit dans le "précis d'analyse d'images" de Coster et Chermant (éditeur...).

Tous les motifs d'images strictement inférieurs à la taille de symbole (bruit) sont "nettoyés" par l'érosion. La dilatation permet de restaurer les formes qui n'ont pas disparu lors de la première phase.

Une fois cette opération réalisée, on effectue une lecture séquentielle des bits ligne par ligne en commençant par le premier bit en haut à gauche. Les marques gauche et droite ajoutées lors de la constitution de la signature graphique, permettent de guider la lecture des bits.

Dans le cas d'une vérification a posteriori, la page télécopie est imprimée. Un effet pervers du bruit est de provoquer le débordement de certains carrés noirs sur des carrés blancs. Ces déformations d'image provoquent la disparition de bits à 0 (respectivement l'apparition de bits en trop pour les 1). Pour pallier cet inconvénient, on utilise une procédure basée sur l'écart algébrique entre le nombre de bits lus et le nombre de bits théoriques ; les erreurs isolées étant corrigées grâce au code de contrôle précité.

En effet, les déformations locales d'images dues à l'impression entraînent une modification des longueurs de blocs, par exemple un bloc de n bits ne mesure plus n x L (L : longueur d'un bit) mais n x L +ε. Si $|ε| \leq L/2$, on peut alors compter n+1 bits ou n-1 bits, ce qui peut créer l'apparition ou la disparition d'un bit. Pour pallier ce problème, on calcule le surplus algébrique ε ajouté à chaque bloc de bits "0" ou "1" identiques. En pratique, la déformation $ε_2$ subie par un bloc est liée à la déformation $ε_1$ du bloc précédent et celle $ε_3$ du bloc suivant. On suppose alors que deux déformations successives n'ont pas le même signe. Par exemple, si $ε_2$ est positif (bloc du milieu légèrement contracté), deux blocs encadrants sont un peu dilatés et on doit retrouver une déformation chez $ε_1$ et $ε_3$ avec un signe opposé ($ε_1 < 0$ et $ε_3 < 0$). Dès que deux déformations successives sont de même signe, on suspecte l'existence d'un problème d'impression. On vérifie alors qu'il s'agit d'un incident effectif et non d'une petite fluctuation sur les valeurs des déformations.

Pour avoir un incident, il faut par exemple que :

$$\left| \sum_{i=1}^{3} \varepsilon_i \right| > 0,6$$

$$|\varepsilon_2| > 0,4$$

$$|\varepsilon_i| > 0,02$$

On doit alors vérifier la cohérence entre les bits du message M et les bits de la signature électronique S (M). En effet, la signature électronique calculée par la carte à mémoire de l'émetteur est vérifiable par la carte à mémoire du récepteur ou par le serveur. En cas de succès, la deuxième étape consiste à vérifier la cohérence "graphique" entre le code "morse" décodé et l'image reçue en clair de la zone certifiée. En cas de non cohérence, la télécopie est considérée comme non intègre.

S'il s'agit d'une composition réalisée à partir d'un micro-ordinateur, l'algorithme détermine à partir des bits lus dans la zone "morse" les codes ASCII et redonne les caractères correspondants. Le récepteur B ne dispose pas forcément de la police de caractères utilisée par l'émetteur, aussi les caractères issus de la signature graphique apparaissent dans un type choisi par B. Le récepteur ou le serveur (vérification a posteriori) imprime ou visualise sur un écran les caractères décodés et l'opérateur les compare visuellement au message contenu en clair sur la page télécopie reçue. Le codage graphique étant bijectif, on peut repérer tout défaut d'intégrité sur la télécopie par non-cohérence entre l'image et le sceau.

Dans le cas d'une zone "morse" représentant le fichier bitmap de la page, le fichier binaire M obtenu après lecture doit être décompacté (décompactage classique en télécopie) pour fournir le fichier bitmap de l'image envoyée.

En effet, dans une opération de compactage après avoir réduit l'image à une résolution 1/4, 1/4 (1 pixel sur 4 en hauteur, 1 pixel sur 4 en largeur), en évitant de retirer les motifs isolés, par exemple, avec la méthode JBIG, le fichier est comprimé par un codage réversible utilisé en télécopie, à savoir le codage "T4" ou "T6" par exemple.

L'image reçue en clair par le récepteur est assez peu bruitée dans le cas d'une vérification à la réception ("on line"), par contre elle l'est fortement dans le cas 'une vérification a posteriori. Ceci est dû à l'impression sur papier de l'image et de sa rescannérisation ultérieure après stockage. Ainsi, l'image issue de la zone morse et celle reçue ne correspondent pas pixels à pixels à cause des déformations et altérations dues aux bruits.

En conséquence, on réalise par exemple une différence dite "élastique" entre l'image issue de la signature graphique et le fichier bitmap reçu en clair sur papier. Cette procédure permet de tolérer des déformations locales entre deux images. Seule une fraude sur le texte de la télécopie induit une différence élevée.

Une telle différence est basée sur un algorithme de programmation dynamique qui cherche à minimiser la distance entre les deux images, comme décrit dans l'article de S. Duval, R. Collot, M. Achemlal intitulé "Comparison of two images by dynamic programming" (publié dans .....). La procédure permet ainsi de pouvoir comparer deux images de forme générale semblable, les seules différences acceptées étant des déformations locales et des translations. En effet, à un pixel (i, j) de la première image, l'algorithme associe le pixel de la seconde image appartenant à un voisinage de (i, j) tel que la distance entre les deux pixels soit minimum.

Dans un souci de simplicité, la comparaison entre les deux images peut être réalisée visuellement par le récepteur ou le serveur, qui imprime ou affiche sur écran le résultat de l'image contenue dans la zone "morse". Les performances du système oeil-cerveau permettent à l'opérateur de rejeter des déformations ou des défauts mineurs imputables aux bruits. Par contre, tout acte de falsification par un tiers (défaut d'intégrité) ou par le destinataire fraudeur (contrôle ultérieur) est facilement repérable.

Le serveur dont il est question ci-dessus peut jouer une fonction de "notaire" électronique qui comprend un terminal informatique possédant une liaison télécopie. Un tel serveur est nécessaire dès lors que le récepteur n'est pas sécurisé pour permettre une vérification a posteriori. Il effectue alors des services d'archivage et d'horodatage. Il peut assurer un "accusé de réception" du côté destinataire.

L'invention permet ainsi de vérifier l'intégrité d'une image ou d'un donneur, et d'éviter la répudiation d'un document reçu par télécopie.

**Intégrité**

En ce qui concerne l'intégrité, un document peut, en effet, subir des modifications malveillantes durant la transmission ou le stockage de la télécopie côté destinataire. Pour la vérification de l'intégrité, on dispose comme support numérique du fichier bitmap de la page (directement pour une vérification "on line" ou obtenu après rescannérisation (pour une vérification a posteriori). On lit la zone "morse", on vérifie la signature électronique S(M), puis on regarde la cohérence de l'image issue de la signature graphique avec l'image reçue. Tout défaut d'intégrité du document reçu est détecté grâce à la non-conformité de la signature S(M) et du message M et/ou de la non-conformité du message en clair M et du code morse. Par exemple, le récepteur fraudeur B ne peut modifier le message M et son code morse de manière cohérente. En effet, s'il modifie M en M1, il peut accéder à la série binaire de M1, mais il ne peut obtenir la signature S(M1) réalisée avec la clé secrète de l'émetteur. Dans ce cas, le résultat de la vérification de la signature électronique est mauvais. Ceci interdit à B l'accès à la signature graphique correspondant à M1. L'opération symétriquement inverse qui consiste à trouver le message M' à partir d'une signature S(M') échoue pour la même raison. L'algorithme de vérification détecte ainsi tout défaut d'intégrité du document. On voit ici l'analogie avec une signature physique placée sur une lettre.

**Non répudiation**

En ce qui concerne la non répudiation, on se place dans le cas d'un contrôle différé et d'un stockage sur papier. La première étape consiste à vérifier la signature électronique S(M) contenue dans la représentation graphique. L'identité de l'émetteur est alors prouvée. On retrouve l'analogie avec une signature placée sur un document papier donnant l'identité de l'émetteur. Il faut ensuite vérifier la conformité du message binaire M et de la signature et la correspondance entre le codage graphique et l'image reçue. En cas de résultat positif, l'émetteur ne peut répudier le document présenté par le récepteur devant une autorité juridique. Dans le cas d'un destinataire malhonnête qui falsifie dans son intérêt la télécopie reçue, l'émetteur peut demander à un juge de vérifier l'intégrité du document présenté par le récepteur. La vérification indique alors une non-cohérence entre la signature graphique et le message. Le destinataire ne peut, en effet, imiter la signature de l'émetteur.

L'intérêt de l'invention est de permettre un stockage papier de documents de manière sécurisée.

Cette invention convient parfaitement à l'échange de documents par télécopie. L'utilisation de techniques de traitement d'image permet d'associer une signature graphique à toute page télécopie transmise. Cette signature garantit l'intégrité du document pendant sa transmission ou son stockage sur papier et en donne son origine.

Une autre application possible est l'affranchissement informatique postal. Le codage graphique est alors utilisé pour affranchir l'enveloppe.

**Revendications**

1. Dispositif sécurisé de transmission de document par télécopie, caractérisé en ce que, du côté émetteur (A), il comprend un module de sécurisation plaçant, dans le fichier binaire (10) transmis représentant une page de ce document, une signature graphique (16) de type "morse" formée de plusieurs lignes symboles séparées par des interlignes, le symbole élémentaire étant un carré, tout bit valant « 1» étant représenté par un carré d'une couleur déterminée et tout bit valant « 0 » par un carré d'une couleur différente, les informations d'une même ligne étant contiguës, des marques gauche et droite, utiles lors de la relecture des bits étant placées en début et fin de ligne, et en ce que cette signature est disposée dans le bas de la page émise, ou sur une page supplémentaire qui regroupe les signatures graphiques de toutes les pages d'un même document.

2. Dispositif selon la revendication 1, caractérisé en ce qu'il comprend un micro-ordinateur (15) qui calcule et place la signature graphique (16) au moment de la composition du message.

3. Dispositif selon la revendication 1, caractérisé en ce qu'il comprend un télécopieur sécurisé avec un module de sécurisation intégré.

4. Dispositif selon la revendication 1, caractérisé en ce qu'il comprend un télécopieur avec un boîtier de sécurisation en série sur la ligne de transmission.

5. Dispositif selon l'une quelconque des revendications précédentes, caractérisé en ce qu'un module de sécurité est intégré dans le module de sécurisation pour obtenir une signature électronique du message qui est intégrée au codage graphique.

6. Dispositif selon la revendication 5, caractérisé en ce que le module de sécurité comporte un lecteur de cartes à mémoire capable de lire une carte à mémoire propre à chaque utilisateur qui possède un code confidentiel permettant d'authentifier celui-ci.

7. Dispositif selon la revendication 1, caractérisé en ce que, du côté récepteur (B), il comprend un module de décodage et de vérification de la signature graphique.

8. Procédé de sécurisation de transmission de documents par télécopie, caractérisé en ce qu'à l'émission, on associe à chaque page de document émise une signature graphique la représentant, en ce que cette signature graphique est formée de plusieurs lignes symboles séparées par des interlignes, le symbole élémentaire étant un carré, tout bit valant « 1 » étant représenté par un carré d'une couleur déterminée et tout bit valant « 0 » par un carré d'une couleur différente, les informations d'une même ligne étant contiguës, des marques gauche et droite, utiles lors de la relecture des bits étant placées en début et fin de ligne, et en ce que cette signature est disposée dans le bas de la page émise, ou sur une page supplémentaire qui regroupe les signatures graphiques de toutes les pages d'un même document.

9. Procédé selon la revendication 8, caractérisé en ce que pour assurer une importante immunité au bruit de la signature graphique, on ajoute des bits de redondance au signal codé permettant de corriger, lors de la lecture, des erreurs isolées.

10. Procédé selon la revendication 9, caractérisé en ce qu'on utilise un code de Hamming sur 127 bits avec 7 bits de contrôle.

11. Procédé selon la revendication 8, caractérisé en ce qu'à la réception, on utilise un filtrage morphologique "antibruit" qui permet d'éliminer sur la partie du fichier bitmap correspondant à la signature graphique les défauts d'image survenus lors de la transmission et/ou de l'impression et/ou du stockage (taches, traits, pliures...) dont la taille est strictement inférieure à la taille des carrés.

12. Procédé selon l'une quelconque des revendications 8 à 11, caractérisé en ce qu'à la réception, le fichier bitmap de l'image est reçu directement, ou bien obtenu à partir d'une feuille rescannérisée dans le cas d'un contrôle a posteriori.

13. Procédé selon la revendication 12, caractérisé en ce qu'on effectue une lecture séquentielle des bits ligne par ligne en commençant par le premier bit en haut à gauche, les marques gauche et droite ajoutées lors de la constitution de la signature graphique permettant de guider la lecture des bits.

14. Procédé selon la revendication 13, caractérisé en ce que dans le cas d'une vérification a posteriori, on imprime la page télécopie, et on calcule le surplus algébrique εi ajouté à chaque bloc de bits "0" ou "1" identiques, on détecte un incident si :

$$\left| \sum_{i=1}^{3} \varepsilon i \right| > 0,6 \quad \text{et} \quad |\varepsilon i| > 0,02$$

15. Procédé selon l'une quelconque des revendications 12 à 14, caractérisé en ce que l'on vérifie la cohérence entre les bits du message et les bits de signature électronique.

16. Procédé selon la revendication 15, caractérisé en ce qu'on vérifie la cohérence entre la signature graphique décodée et l'image reçue en clair.

17. Procédé selon la revendication 16, caractérisé en ce qu'à la réception en cas de vérification a posteriori, on réalise une différence "élastique" entre l'image issue de la signature graphique et l'image reçue en clair.

18. Code graphique d'authentification d'une image, caractérisé en ce qu'il comprend un ensemble de lignes symboles, correspondant à un codage de ladite image, séparées par des interlignes, le symbole élémentaire étant un carré, tout bit valant « 1 » étant représenté par un carré d'une couleur déterminée et tout bit valant « 0 » par un carré d'une couleur différente, les informations d'une même ligne étant contiguës, des marques gauche et droite, utiles lors de la relecture des bits étant placées en début et fin de ligne, et en ce que ce code est disposé dans le bas d'une page d'un document, ou sur une page supplémentaire qui regroupe les codes de toutes les pages d'un même document.

19. Code selon la revendication 18, caractérisé en ce que le premier carré est un carré noir et le second un carré blanc.

20. Code selon la revendication 18, caractérisé en ce que ces marques gauche et droite sont formées de deux carrés noirs séparés des carrés représentant les bits utiles par un carré blanc.

## Patentansprüche

1. Sicherheitsvorrichtung zur Übertragung eines Dokuments durch Telekopie,
**dadurch gekennzeichnet,**
daß sie auf der Senderseite (A) einen Sicherungsmodul umfaßt, der in der übertragenen, eine Seite dieses Dokuments darstellenden Binärdatei (10) eine graphische Signatur (16) des "Morse"-Typs anbringt, gebildet durch mehrere Symbolzeilen, getrennt durch Zwischenzeilen, wobei das elementare Symbol ein Quadrat ist, jedes Bit mit dem Wert "1" durch ein Quadrat mit einer bestimmten Farbe dargestellt wird-und jedes Bit mit dem Wert "0" durch ein Quadrat mit einer anderen Farbe, die Informationen bzw. Daten von ein und derselben Zeile aneinandergrenzen und linke und rechte Markierungen, nützlich beim Wiederlesen der Bits, am Zeilenanfang und -ende vorgesehen sind, und dadurch, daß diese Signatur im Unterteil der gesendeten Seite oder auf einer zusätzlichen Seite angebracht wird, die die graphischen Signaturen aller Seiten desselben Dokuments zusammenfaßt.

2. Vorrichtung nach Anspruch 1, dadurch gekennzeichnet, daß sie einen Mikrocomputer (15) umfaßt, der die graphische Signatur (16) im Moment des Herstellens der Nachricht berechnet und anbringt.

**3.** Vorrichtung nach Anspruch 1, dadurch gekennzeichnet, daß sie einen Sicherheitstelekopierer mit einem integrierten Sicherungsmodul umfaßt.

**4.** Vorrichtung nach Anspruch 1, dadurch gekennzeichnet, daß sie einen Telekopierer mit einem Sicherungsgehäuse in Serie in der Übertragungsleitung umfaßt.

**5.** Vorrichtung nach einem der vorangehenden Ansprüche, dadurch gekennzeichnet, daß ein Sicherheitsmodul in dem Sicherungsmodul integriert ist, um eine elektronische Signatur der Nachricht zu erhalten, die in die graphische Codierung integriert ist.

**6.** Vorrichtung nach Anspruch 5, dadurch gekennzeichnet, daß der Sicherheitsmodul einen Speicherkartenleser umfaßt, fähig eine jedem Benutzer eigene Speicherkarte zu lesen, die einen vertraulichen Code besitzt, der ermöglicht, diesen zu authentisieren.

**7.** Vorrichtung nach Anspruch 1, dadurch gekennzeichnet, daß sie auf der Empfängerseite (B) einen Decodier- und Prüfmodul der graphischen Signatur umfaßt.

**8.** Sicherungsverfahren zur Übertragung von Dokumenten durch Telekopie, dadurch gekennzeichnet, daß man bei der Sendung jeder gesendeten Dokumentseite eine sie repräsentierende graphische Signatur zuordnet, dadurch, daß diese graphische Signatur durch mehrere Symbol zeilen gebildet wird, getrennt durch Zwischenzeilen, wobei das elementare Symbol ein Quadrat ist, jedes Bit mit dem Wert "1" durch ein Quadrat mit einer bestimmten Farbe dargestellt wird und jedes Bit mit dem Wert "0" durch ein Quadrat mit einer anderen Farbe, die Informationen bzw. Daten von ein und derselben Zeile aneinandergrenzen und linke und rechte Markierungen, nützlich beim Wiederlesen der Bits, am Zeilenanfang und -ende vorgesehen sind, und dadurch, daß diese Signatur im Unterteil der gesendeten Seite oder auf einer zusätzlichen Seite angebracht wird, die die graphische Signaturen aller Seiten desselben Dokuments zusammenfaßt.

**9.** Verfahren nach Anspruch 8, dadurch gekennzeichnet, daß man, um eine große Rausch-Unempfindlichkeit bezüglich der graphischen Signatur zu gewährleisten, dem codierten Signal Redundanzbits hinzufügt, die ermöglichen, beim Lesen isolierte bzw. einzelne Fehler zu korrigieren.

**10.** Verfahren nach Anspruch 9, dadurch gekennzeichnet, daß man einen Hamming-Code über 127 Bits mit 7 Prüfbits benutzt.

**11.** Verfahren nach Anspruch 8, dadurch gekennzeichnet, daß man beim Empfang ein morphologisches "Antigeräusch"-Filtern anwendet, das ermöglicht, in dem Teil der Bitmap-Datei, der der graphischen Signatur entspricht, die Bildfehler zu eliminieren, die auftreten während des Übertragens und/oder Druckens und/oder Lagerns (Flecken, Linien bzw. Striche, Falten...), deren Größe strikt kleiner ist als die Größe der Quadrate.

**12.** Verfahren nach einem der Ansprüche 8 bis 11, dadurch gekennzeichnet, daß man beim Empfang die Bitmap-Datei des Bilds direkt empfängt oder im Falle einer nachträglichen Kontrolle aufgrund eines wiederabgetasteten Blattes erhält.

**13.** Verfahren nach Anspruch 12, dadurch gekennzeichnet, daß man die Bits Zeile für Zeile sequentiell liest, indem man bei dem ersten Bit links oben beginnt, wobei die Markierungen links und rechts, hinzugefügt bei der Bildung der graphischen Signatur, ermöglichen, die Lektüre der Bits zu leiten.

**14.** Verfahren nach Anspruch 13, dadurch gekennzeichnet, daß man, im Falle einer nachträglichen Überprüfung, die Telekopieseite druckt, den jedem Block identischer "0"- oder "1"-Bits hinzugefügten algebraischen Überschuß $\epsilon i$ berechnet und ein Ereignis bzw. eine Störung detektiert, wenn:

$$\left| \sum_{i=1}^{3} \epsilon i \right| > 0,6 \text{ und } |\epsilon i| > 0,02$$

**15.** Verfahren nach einem der Ansprüche 12 bis 14, dadurch gekennzeichnet, daß man die Kohärenz zwischen den Bits der Nachricht und den Bits der elektronischen Signatur prüft.

**16.** Verfahren nach Anspruch 15, dadurch gekennzeichnet, daß man die Kohärenz zwischen der decodierten graphischen Signatur und dem unverschlüsselt empfangenen Bild prüft.

**17.** Verfahren nach Anspruch 16, dadurch gekennzeichnet, daß man beim Empfang im Falle nachträglicher Prüfung eine "elastische" Differenz zwischen dem von der graphischen Signatur stammenden Bild und dem unverschlüsselt erhaltenen Bild realisiert.

**18.** Graphischer Authentisierungcode eines Bildes, dadurch gekennzeichnet, daß er eine Gruppe von einer Codierung des genannten Bilds entsprechenden Symbolzeilen enthält, getrennt durch Zwischenzeilen, wobei das elementare Symbol ein Quadrat ist, jedes Bit mit dem Wert "1" durch ein Quadrat mit einer bestimmten Farbe dargestellt wird und jedes Bit mit dem Wert "0" durch ein Quadrat mit einer anderen Farbe, die Informationen bzw. Daten von ein und derselben Zeile aneinandergrenzen und linke und rechte Markierungen, nützlich beim Wiederlesen der Bits, am Zeilenanfang und -ende vorgesehen sind, und dadurch, daß diese Signatur im Unterteil einer Seite eines Dokuments oder auf einer zusätzlichen Seite angebracht wird, die die Codes aller Seiten desselben Dokuments zusammenfaßt.

19. Code nach Anspruch 18, dadurch gekennzeichnet, daß das erste Quadrat ein schwarzes Quadrat ist und das zweite ein weißes Quadrat.

20. Code nach Anspruch 18, dadurch gekennzeichnet, daß diese Markierungen rechts und links durch zwei schwarze Quadrate gebildet werden, die von den die nützlichen Bits darstellenden Quadraten durch ein weißes Quadrat getrennt sind.

**Claims**

1. Apparatus for the secure transmission of documents by fax, characterized in that, on the emitter side (A), it comprises a securing module placing, in the binary file (10) transmitted representing a page of said document, a graphic signature (16) of the "morse" type formed by several symbol lines separated by line spaces, the elementary symbol being a square, any bit of value "1" being represented by a square of a given colour and any bit of value "0" being represented by a square of a different colour, the informations of one line being contiguous, left and right marks useful during the rereading of bits being placed at the start and end of the line, and in that said signature is placed at the bottom of the emitted page, or on a supplementary page grouping the graphic signatures of all the pages of the same document.

2. Apparatus according to claim 1, characterized in that it comprises a microcomputer (15), which calculates and positions the graphic signature (16) at the time of composing the message.

3. Apparatus according to claim 1, characterized in that it comprises a fax machine secured with an integrated securing module.

4. Apparatus according to claim 1, characterized in that it comprises a fax machine with a securing box in series on the transmission line.

5. Apparatus according to any one of the preceding claims, characterized in that a security module is integrated in the securing module to obtain an electronic signature of the message, which is integrated in the graphic coding.

6. Apparatus according to claim 5, characterized in that the security module has a smart card reader able to read a smart card individual to each user having a confidential code enabling him to authenticate it.

7. Apparatus according to claim 1, characterized in that, on the recipient side (B), it comprises a module for decoding and checking the graphic signature.

8. Process for securing the transmission of documents by fax, characterized in that, on emission, with each emitted document page is associated a graphic signature representing it, in that said graphic signature is formed from several symbol lines separated by line spaces, the elementary symbol being a square, any bit with the value 1 being represented by a square of a given colour and any bit with the value 0 by a square of a different colour, the informations being contiguous, left and right marks, useful during the reading back of the bits, being placed at the start and end of the line and in that said signature is placed in the bottom of the emitted page, or on a supplementary page grouping the graphic signatures of all the pages of the same document.

9. Process according to claim 8, characterized in that, in order to ensure a high immunity, to the noise of the graphic signature, redundancy bits are added to the coded signal permitting the correction of isolated errors during reading.

10. Process according to claim 8, characterized in that use is made of a Hamming code on 127 bits with 7 check bits.

11. Process according to claim 8, characterized in that, on reception, use is made of an "antinoise" morphological masking making it possible to eliminate on that part of the bitmap file corresponding to the graphic signature, the image defects which have occurred during transmission and/or printing and/or storage (spots, lines, folds, etc.), whose size is smaller than that of the squares.

12. Process according to any one of the claims 8 to 11, characterized in that, on reception, the bitmap file of the image is received directly, or is obtained from a rescanned sheet in the case of an a posteriori check.

13. Process according to claim 12, characterized in that there is a sequential reading of the bits line by line commencing with the first bit top left, the left and right marks added during the formation of the graphic signature making it possible to guide the reading of the bits.

14. Process according to claim 13, characterized in that, in the case of an a posteriori check, the fax page is printed and a calculation is made of the algebraic excess i added to each identical "0" or "1" bit block and a fault is detected if

$$\left| \sum_{i=1}^{3} \varepsilon_i \right| > 0.6 \text{ and } |\varepsilon_i| > 0.02$$

15. Process according to any one of the claims 12 to 14, characterized in that the consistency between the bits of the message and the electronic signature bits is checked.

16. Process according to claim 15, characterized in that the consistency between the decoded graphic signature and the image received in uncoded form is checked.

17. Process according to claim 16, characterized in that, on reception and in the case of an a posteriori check, an "elastic" difference is formed between the image from the graphic signature and the image received in uncoded form.

18. Graphic code for authenticating an image, characterized in that it comprises a group of symbol lines, corresponding to a coding of said image, separated by line spaces, the elementary symbol being a square, any bit of value "1" being represented by a square of a given colour, e.g. black, and any bit of value "0" being represented by a square of a different colour, e.g. white, the informations of the same line being contiguous, left and right marks useful during the rereading of bits being placed at the start and end of the line, and in that said code is placed at the bottom of a page of a document, or on a supplementary page grouping the codes of all the pages of the same document.

19. Code according to claim 18, characterized in that the first square is a black square and the second is a white square.

20. Code according to claim 18, characterized in that these left and right marks are formed from two black squares separated from the squares representing the useful bits by a white square.

FIG. 1

FIG. 2